# EUROPÄISCHE PATENTSCHRIFT

(11) **EP 2 906 729 B1**
(45) Veröffentlichungstag und Bekanntmachung des Hinweises auf die Patenterteilung: **24.04.2019**
(21) Anmeldenummer: 13798562.8
(22) Anmeldetag: 09.10.2013
(51) Int. Cl.: C22B 7/00, C22B 26/12

(54) **VERFAHREN ZUR HYDROMETALLURGISCHEN RÜCKGEWINNUNG VON LITHIUM AUS DER LITHIUM-MANGANOXID HALTIGEN FRAKTION GEBRAUCHTER GALVANISCHER ZELLEN**
METHOD FOR THE HYDROMETALLURGICAL RECOVERY OF LITHIUM FROM THE LITHIUM MANGANESE OXIDE-CONTAINING FRACTION OF USED GALVANIC CELLS
PROCÉDÉ DE RÉCUPÉRATION HYDROMÉTALLURGIQUE DE LITHIUM À PARTIR DE LA FRACTION DE CELLULES GALVANIQUES USAGÉES CONTENANT DE L'OXYDE MANGANEUX DE LITHIUM

(30) Priorität: 10.10.2012 DE 102012218468
(43) Veröffentlichungstag der Anmeldung: 19.08.2015
(73) Patentinhaber: Albemarle Germany GmbH, 65926 Frankfurt am Main (DE)
(72) Erfinder: WOHLGEMUTH, David, 65936 Frankfurt (DE); SCHNEIDER, Mark Andre, 61381 Friedrichsdorf-Burgholzhausen (DE); SPIELAU, Rebecca, 65817 Eppstein (DE); WILLEMS, Johannes, 60489 Frankfurt (DE); STEINBILD, Martin, 60322 Frankfurt (DE); KLIEHM, Norbert, 63674 Altenstadt (DE)
(74) Vertreter: Rottmayer, Hans
(86) Internationale Anmeldenummer: PCT/EP2013/003029
(87) Internationale Veröffentlichungsnummer: WO 2014/056610

(56) Entgegenhaltungen:
- EP-A1- 1 760 821
- FR-A1- 2 796 207
- KR-A- 20120 031 831
- LIANG SUN ET AL: "Organic oxalate as leachant and precipitant for the recovery of valuable metals from spent lithium-ion batteries", WASTE MANAGEMENT, ELSEVIER, NEW YORK, NY, US, Bd. 32, Nr. 8, 28. März 2012 (2012-03-28), Seiten 1575-1582, XP028503554, ISSN: 0956-053X, DOI: 10.1016/J.WASMAN.2012.03.027 [gefunden am 2012-04-04]

## Beschreibung

Gegenstand der Erfindung ist ein Verfahren zur hydrometallurgischen Rückgewinnung von Lithium aus der Lithium-Manganoxid haltigen Fraktion gebrauchter galvanischer Zellen.

Mobile elektronische Geräte benötigen zur unabhängigen Stromversorgung immer leistungsfähigere wieder aufladbare Batterien. Für diese Zwecke werden wegen ihrer Energiedichte ausgedrückt in Wh/kg, der Zyklenbeständigkeit und der geringen Selbstentladung Lithium-lonen-Batterien eingesetzt. Sehr weitverbreitet sind LithiumIonen-Batterien mit Übergangsmetalloxiden als aktives Kathodenmaterial. Das aktive Kathodenmaterialien in diesen Batterien besteht aus Lithium-Übergangsmetalloxiden, aus dem beim Ladevorgang Lithiumionen freigesetzt und in das Anodenmaterial interkaliert werden. Von besonderer Bedeutung sind die Mischoxide des Lithiums mit denen des Mangans, die auch unter der Abkürzung Manganspinell-Zellen oder -Batterien bekannt sind. Großformatige Lithiumakkumulatoren werden für stationäre Anwendungen (power back-up) oder im Automobilbereich für Traktionszwecke (Hybridantriebe oder reinelektrischen Antrieb) eingesetzt. Im Hinblick auf die Sicherheit bei letztgenannten Anwendungen wird Lithium-Manganoxid -Batterien eine überragende Bedeutung eingeräumt. Da mit der Größe und der Anzahl der hergestellten, ge- und anschließend verbrauchten Batterien die Menge der darin enthaltenen Wertstoffe wächst, ist ein ökonomisches Verfahren zur Rückgewinnung des in den Batterien enthaltenen Lithiums erforderlich.

Aus dem Dokument WO 2012/072619 A1 ist ein Verfahren zur Rückgewinnung von Lithium aus der LiFePO₄-haltigen Fraktion geschredderter und gesichteter Zellen bekannt, bei dem die LiFePO₄-haltige Fraktion mit Säurelösung in Gegenwart eines Oxidationsmittels behandelt wird. Die herausgelösten Lithiumionen werden vom ungelösten Eisenphosphat abgetrennt und aus der Lithium haltigen Lösung als Salz gefällt. Die hydrometallurgische Aufarbeitung erfolgt mit verdünnter Schwefelsäure unter Einleitung von Sauerstoff, Ozon oder Zusatz von Wasserstoffperoxid im Temperaturbereich von 80°C bis 120°C.

Nachteilig an diesem Verfahren ist die hohe Energieintensivität des Extraktionsprozesses, die hohen Anforderungen hinsichtlich der Korrosionsbeständigkeit der eingesetzten Apparaturen und die Reinheit der durch Ausfällung erhältlichen Lithiumsalze.

Aus dem Dokument KR 2012 0031831 A ist die Gewinnung von Lithium aus dem aktiven Kathodenmaterial von Lithiumionenbatterien mittels Umsetzung von Lithiummanganspinell (LiMn₂O₄) mit Oxalsäure bekannt. Jedoch wird keine Partikelgröße des eingesetzten Materials angegeben. Die entstandene Lösung wird vom ungelösten Rückstand abfiltriert und anschließend in einem Schritt b) erfolgt ein Zusatz von kalzinierter Soda zum Filtrat. Der pH-Wert der Lösung wird damit auf pH 9 bis 10 eingestellt und gelöstes Mangan als Hydroxyd und Karbonat ausgefällt. In einem Schritt c) wird danach Lithiumkarbonat durch Zusatz von Ethanol im Volumenverhältnis zum Filtrat von 1 : 1 bis 1 : 4 ausgefällt.

Die Erfindung hat sich die Aufgabe gestellt, ein Verfahren anzugeben, das höchstmögliche Energieeffizienz bei der Extraktion des Lithiums bei gleichzeitig niedrigen Anforderungen hinsichtlich der Korrosionsbeständigkeit der eingesetzten Extraktionsapparatur und erhöhte Reinheit der erhaltenen Lithiumverbindungen sicherstellt.

Die gestellte Aufgabe wird gelöst, durch ein Verfahren zur hydrometallurgischen Rückgewinnung von Lithium aus der Lithium-Manganoxid haltigen Fraktion gebrauchter galvanischer Zellen, bei dem eine Lithium-Manganoxid haltige Fraktion mit einer Partikelgröße bis 500 um in die bezogen auf den Mangangehalt im Lithium-Manganoxid überstöchiometrischen Menge Oxalsäure, wobei ein 0,1 bis 1 molarer Überschuss eingesetzt wird, und einem Feststoff zu Flüssiqkeits-Verhältnis im Bereich von 10 bis 250 g/l eingebracht bei Temperaturen von 30 bis 70°C aufgeschossen,
- die gebildete Lithium haltige Lösung abgetrennt und
- der verbleibende Rückstand mindestens zweimal gewaschen, die abgetrennte Lithium- und die Lithium haltigen Wasch-Lösungen vereinigt.
- noch gelöste Manganrestgehalte durch Fällung als Hydroxid reduziert, abgetrennt und gewaschen werden und
- in der verbleibenden Lösung Lithium in das Karbonat. Chlorid oder Sulfat überführt und vorzugsweise durch anschließende Kristallisation weiter gereinigt wird. Überraschender Weise wurde gefunden, dass die Extraktion des Lithiums ohne zusätzliche Wärmequelle, bereits bei Ausnutzung der während der Extraktion freiwerdenden Reaktionswärme stattfindet. Dadurch, dass die Reaktionswärme durch die Dosierung des Reduktionsmittels kontrolliert und sehr gering gehalten wird, kann eine quasi autokatalytische Zersetzung des Reduktionsmittels generell vermieden werden. Zur Extraktion des Lithiums müssen quasi nur stöchiometrische Mengen Reduktionmittel eingesetzt werden. Das Mangan fällt in Abhängigkeit der gewählten Reaktionsbedingungen bereits während der Extraktion vorwiegend als ungelöstes Manganoxalat an.

Dabei wird unter den angegebenen milden hydrometallurgischen Aufschlussbedingungen das enthaltene Lithium zu mehr als 95 Gew.-% in Lösung gebracht und zu mehr als 90 Gew.-% zurück gewonnen.

Vorzugsweise wird weiterhin der Gehalt an mehrwertigen Metallkationen mittels Ionenaustauscher reduziert. Der verminderte Gehalt an mehrwertigen Metallkationen wirkt sich insbesondere positiv auf eine weitere Prozessierung der Lösung mittels Elektrodialyse mit bipolaren Membranen aus, da hier diese Metallkationen als "Membrangifte" aufgrund ihrer Abscheidung in Form der Hydroxide in und auf den eingesetzten Membranen wirken.

Besonders bevorzugt weist die Lithium-Manganoxid haltige Fraktion eine Partikelgröße von 100 bis 400 µm auf. Der Einsatz der genannten Partikelgröße verbessert das Aufschlussverhalten.

Vorteilhafter Weise wird die Oxalsäure mit einer Konzentration von 0,5 bis 1,0 mol/l oder als direkt als Feststoff eingesetzt. Der Einsatz von fester Oxalsäure vermindert das Reaktionsvolumen beträchtlich.

Besonders bevorzugt wird das Feststoff zu Flüssigkeits-Verhältnis im Bereich von 45 bis 90 g/l eingestellt. Trotz des hohen Feststoffgehaltes in der Reaktionsmischung wird das enthaltene Lithium nahezu quantitativ in Lösung gebracht.

Vorzugsweise wird der Aufschluss bei Temperaturen von 40 bis 60°C durchgeführt. Überraschender Weise wird dadurch die Effektivität des Herauslösens des Lithiums weder hinsichtlich der Zeitdauer noch der Menge wesentlich beeinflusst. Der genannte Temperaturbereich ist mit einfachen anlagentechnischen Mitteln einstellbar.

Vorteilhafter Weise wird der Aufschlussrückstand mindestens dreimal gewaschen. Es wurde gefunden, dass damit mehr als 90 Gew.-% des enthaltenen Lithiums erhalten werden kann.

Vorzugsweise wird die Oxalsäure im Überschuss eingesetzt, um eine gleichzeitige Fällung von Manganoxalat und Lithium in Form des Karbonats zu vermeiden. Besonders bevorzugt wird ein 0,2 bis 0,8 molarer Überschuss eingesetzt.

Im Folgenden wird der erfindungsgemäße Prozess allgemein beschrieben.

### Beispiele

Die Erfindung wird anhand der nachfolgenden Beispiele und der Tabelle 1 erläutert.

Unter den in Tabelle 1 angegebenen Bedingungen wurden 6 Versuche unter den angegebenen Bedingungen mit einer Lithium-Manganoxid haltigen Fraktion durchgeführt.

## Patentansprüche

1. Verfahren zur hydrometallurgischen Rückgewinnung von Lithium aus der Lithium-Manganoxid haltigen Fraktion gebrauchter galvanischer Zellen, **dadurch gekennzeichnet, dass**
- eine Lithium-Manganoxid haltige Fraktion mit einer Partikelgröße bis 500 µm in die bezogen auf den Mangangehalt im Lithium-Manganoxid überstöchiometrischen Menge Oxalsäure, wobei ein 0,1 bis 1 molarer Überschuss eingesetzt wird, und einem Feststoff zu Flüssigkeits-Verhältnis im Bereich von 10 bis 250 g/l eingebracht bei Temperaturen von 30 bis 70°C aufgeschlossen,
- die gebildete Lithium haltige Lösung abgetrennt und
- der verbleibende Rückstand mindestens zweimal gewaschen, die abgetrennte Lithium- und die Lithium haltigen Wasch-Lösungen vereinigt,
- noch gelöste Manganrestgehalte durch Fällung als Hydroxid reduziert, abgetrennt und gewaschen werden und
- in der verbleibenden Lösung Lithium in das Karbonat, Chlorid oder Sulfat überführt und vorzugsweise durch anschließende Kristallisation weiter gereinigt wird.

2. Verfahren nach Anspruch 1, **dadurch gekennzeichnet, dass** der Gehalt an mehrwertigen Metallkationen mittels Ionenaustauscher reduziert wird.

3. Verfahren nach Anspruch 1 oder 2, **dadurch gekennzeichnet, dass** die Lithium-Manganoxid haltige Fraktion eine Partikelgröße von 100 bis 400 µm aufweist.

4. Verfahren nach Anspruch 1 bis 3, **dadurch gekennzeichnet, dass** die Oxalsäure mit einer Konzentration von 0,5 bis 1,0 mol/l eingesetzt wird.

5. Verfahren nach Anspruch 1 bis 4, **dadurch gekennzeichnet, dass** das Feststoff zu Flüssigkeits-Verhältnis im Bereich von 45 bis 90 g/l eingestellt wird.

6. Verfahren nach Anspruch 1 bis 5, **dadurch gekennzeichnet, dass** der Aufschluss bei Temperaturen von 40 bis 60°C durchgeführt wird.

7. Verfahren nach Anspruch 1 bis 6, **dadurch gekennzeichnet, dass** der Aufschlussrückstand mindestens dreimal gewaschen wird.

8. Verfahren nach Anspruch 1 bis 7, **dadurch gekennzeichnet, dass** ein 0,2 bis 0,8 molarer Überschuss eingesetzt wird.
**Tabelle 1**
| Versuchsnummer | S/L [g/l] | Molverhältnis LMO : *Oxalsäure* | Zugabeform Oxalsäure | Zugabedauer | Reaktionszeit (inkl. Zugabe) | Li [wt.%] | Mn [wt.%] |
|---|---|---|---|---|---|---|---|
| 1 | 45 | 1 : 4 | gelöst | 3360 s | 6240 s | 100 | 5.6 |
| 2 | 59 | 1 : 4 | gelöst | 3240 s | 6720 s | 82 | 4.1 |
| 3 | 167 | 1 : 4 | fest | 2220 s | 8 h | 79 | 1.9 |
| 4 | 45 | 1 : 4,5 | gelöst | 2400 s | 56 h | 96 | 0.7 |
| 5 | 167 | 1 : 4,5 | fest | 2400 s | 8 h | 86 | 0.5 |
| 6 | 167 | 1 : 4,5 | fest | 1860 s | 5 h | 77 | 0.8 |

## Claims

1. A method for hydrometallurgical recovery of lithium from the lithium-manganese oxide-containing fraction of used galvanic cells, **characterized in that**
- a lithium manganese oxide-containing fraction with a particle size of up to 500 µm introduced into the superstoichiometric quantity of oxalic acid based on the manganese content in the lithium-manganese oxide, wherein a 0.1 to 1 molar excess is used, and a solid to liquid ratio in the range of 10 to 250 g/L, is digested at temperatures of 30 to 70°C,
- the lithium-containing solution formed is separated off, and
- the remaining residue is washed at least twice, the separated lithium solution and the lithium-containing wash solutions are combined,
- a residual manganese content still present in solution is reduced by precipitation as the hydroxide, separated and washed and
- in the remaining solution, lithium is converted to the carbonate, chloride or sulfate and preferably further purified by subsequent crystallization.

2. The method according to claim 1, **characterized in that** the content of polyvalent metal cations is reduced using an ion exchanger.

3. The method according to claim 1 or 2, **characterized in that** the lithium-manganese oxide containing fraction has a particle size of 100 to 400 µm.

4. The method according to claims 1 to 3, **characterized in that** the oxalic acid is used at a concentration of 0.5 to 1.0 mol/L.

5. The method according to claims 1 to 4, **characterized in that** the solid to liquid ratio is established in the range of 45 to 90 g/L.

6. The method according to claims 1 to 5, **characterized in that** the digestion is performed at temperatures of 40 to 60°C.

7. The method according to claims 1 to 6, **characterized in that** the digestion residue is washed at least three times.

8. The method according to claims 1 to 7, **characterized in that** a 0.2 to 0.8 molar excess is used.

## Revendications

1. Procédé de récupération hydrométallurgique de lithium à partir de la fraction de cellules galvaniques usagées contenant de l'oxyde manganeux de lithium, **caractérisé en ce que**
- une fraction contenant de l'oxyde manganeux de lithium présentant une taille de particule de 500 µm dans la quantité d'acide oxalique sur-stoechiométrique par rapport à la teneur en manganèse dans l'oxyde manganeux de lithium est décomposée, dans lequel un excédent molaire de 0,1 à 1 mole est utilisé, et un rapport solide sur liquide dans la plage de 10 à 250 g/l est introduit à des températures de 30 à 70 °C,
- la solution formée contenant du lithium est séparée et
- le résidu restant est lavé au moins deux fois, les solutions de lithium et solutions de lavage contenant du lithium séparées sont réunies,
- des teneurs en résidus de manganèse encore dissoutes sont réduites sous forme d'hydroxyde par précipitation, séparées et lavées et
- dans la solution restante, du lithium est converti en carbonate, chlorure ou sulfate et de préférence est encore purifié par cristallisation consécutive.

2. Procédé selon la revendication 1, **caractérisé en ce que** la teneur en ions métalliques polyvalents est réduite au moyen d'échangeurs d'ions.

3. Procédé selon la revendication 1 ou 2, **caractérisé en ce que** la fraction contenant de l'oxyde manganeux de lithium présente une taille de particules de 100 à 400 µm.

4. Procédé selon l'une quelconque des revendications 1 à 3, **caractérisé en ce que** l'acide oxalique est utilisé en une concentration de 0,5 à 1,0 mole/l.

5. Procédé selon l'une quelconque des revendications 1 à 4, **caractérisé en ce que** le rapport solide sur liquide est ajusté dans la plage de 45 à 90 g/l.

6. Procédé selon l'une quelconque des revendications 1 à 5, **caractérisé en ce que** la décomposition est réalisée à des températures de 40 à 60 °C.

7. Procédé selon l'une quelconque des revendications 1 à 6, **caractérisé en ce que** le résidu de décomposition est lavé au moins trois fois.

8. Procédé selon l'une quelconque des revendications 1 à 7, **caractérisé en ce qu'**un excédent de 0,2 à 0,8 mole est utilisé.
